# EUROPEAN PATENT APPLICATION

(11) **EP 4 631 986 A1**
(43) Date of publication of application: **15.10.2025**
(21) Application number: 22967679.6
(22) Date of filing: 14.12.2022
(51) Int. Cl.: C08G 18/73, C08G 18/48, C08G 18/10, C08G 18/42, C08G 18/32, C08G 18/66, C08G 18/65

(54) **POLYURETHANE PREPOLYMER COMPOSITION AND PREPARATION METHOD THEREFOR AND USE THEREOF**

(30) Priority: 06.12.2022 CN 202211556201
(71) Applicant: Mojia (Shanghai) Biotech Co., Ltd, Shanghai 201210 (CN)
(72) Inventor: LAU, Man Kit, Shanghai 201203 (CN); WEI, Xiaojun, Shanghai 201203 (CN); LI, Jianing, Shanghai 201203 (CN); CHIEW, Ansen, Shanghai 201203 (CN)
(74) Representative: Ipsilon
(86) International application number: PCT/CN2022/138893
(87) International publication number: WO 2024/119532

(57) **Abstract**

A polyurethane prepolymer composition and a preparation method therefor and a use thereof. The polyurethane prepolymer composition is aliphatic isocyanate end-capped, and is obtained by reacting aliphatic isocyanate with polyol; the mass percentage content of 1,5-pentamethylene diisocyanate in the aliphatic isocyanate is greater than or equal to 50%; the polyurethane prepolymer composition comprises a combination of a first prepolymer and a second prepolymer, the first prepolymer is an adduct formed by aliphatic isocyanate and polyol according to a molar ratio of 2:1, and the second prepolymer is an adduct formed by aliphatic isocyanate and polyol according to a molar ratio of (n+1):n, wherein n ≥ 2; the mass percentage content of the second prepolymer in the polyurethane prepolymer composition is 15-75%. The polyurethane prepolymer composition has the advantages of large molecular weight, low viscosity and excellent constructability, and the physical properties of a polyurethane product prepared by means of the polyurethane prepolymer composition is remarkably improved.

## Description

### TECHNICAL FIELD

The present application belongs to the technical field of polyurethane materials, and specifically relates to a polyurethane prepolymer composition and a preparation method therefor and use thereof.

### BACKGROUND

Polyurethane is a class of polymer containing repeating carbamate units in its molecular chain. With numerous advantages such as excellent elasticity, good toughness, high hardness, wear resistance, solvent resistance, corrosion resistance, high/low temperature resistance, etc., polyurethane has been widely used in many industries such as building materials, furniture, coatings, plastics, leather and adhesives. The raw materials for preparing polyurethane products usually include two components: the polyhydroxyl compound, such as small-molecule polyols, or polyhydroxyl resins composed of the alkyd resin, polyester resin, hydroxy acrylic resin, and the polyurethane prepolymer, which is formed by the preliminary polymerization of isocyanate monomers and polyols. In the processing of polyurethane, the polyurethane prepolymer and the polyhydroxyl compound are subjected to a deep polymerization reaction, forming various polyurethane products with a large molecular mass. As the main raw material for the preparation of polyurethane products, the components and quality of polyurethane prepolymer directly affect the processing and final performance of the products. Therefore, in order to obtain ideal polyurethane products, it is of great significance to study and optimize the polyurethane prepolymers. For example, CN102659997A discloses a preparation method for a polyurethane prepolymer containing low free isocyanate monomers. The specific steps are as follows: first, triol and diol are combined as a mixed alcohol and then subjected to vacuum dehydration; isocyanate monomers and an ester solvent are added in a reaction vessel and kept at a temperature of 30-70°C, and the mixed alcohol is dripped into the reaction vessel; after the dropwise addition is completed, a reaction is performed at 40-70°C for 3-6 h, and the reaction system is cooled and discharged to obtain the polyurethane prepolymer; the obtained polyurethane prepolymer is separated, and the separated heavy component is added with a dilution solvent to adjust the solid content of the polyurethane prepolymer and the content of free isocyanate monomers. CN103396526A discloses a method for producing a yellowing-resistant polyurethane prepolymer. Firstly, polyether polyol, castor oil polyol and liquid copolymerization polyester polyol are added to a reactor, heated and stirred for 2-3 h, added with aliphatic isocyanate, kept at 80°C and reacted for 2.5 h; then the reaction system is added with an organic tin catalyst, reacted for 1 h, cooled, discharged, and sealed for storage. CN102643407A discloses a preparation method for an isophorone diisocyanate prepolymer, including the following steps: isophorone diisocyanate (IPDI) and polyether polyol react for 1-4 h in the presence of a catalyst to obtain an IPDI prepolymer; the IPDI prepolymer is dropwise added with trimethylolpropane which is dehydrated by solvent azeotropy, and after the dropwise addition is completed, a trimerization catalyst is added, and when the theoretical NCO content is reached, an inhibitor is added. CN109535385A discloses a polyurethane prepolymer, raw materials of which include: 55-90 parts of polyether polyol, 10-25 parts of polyisocyanate, and 2-6 parts of aliphatic or alicyclic diisocyanate. The introduction of aliphatic or alicyclic diisocyanate endows the prepolymer and the surface layer of obtained polyurethane/polyuria with good yellowing resistance.

In general, the current research on polyurethane prepolymer has two directions. The first is to reduce free monomers. Since isocyanate monomers are the raw material of polyurethane prepolymer, it is inevitable that a certain amount of isocyanate monomers will remain in the prepolymer. The residual isocyanate monomers not only bring potential health hazards and safety issues, but also affect the stability of prepolymer, the open period in use and the adhesion performance of polyurethane products. Hence, it is necessary to reduce the content of free isocyanates in the prepolymer. The second is to improve the various physical properties of the prepolymer. For example, the use of aliphatic isocyanate to prepare prepolymers can improve the material in yellowing resistance and aging resistance; the use of aromatic isocyanate to prepare prepolymers can improve the material in strength or other mechanical properties. In recent years, there are higher requirements on the properties and processing of polyurethane products, and the polyurethane prepolymer are facing new challenges: the polyurethane prepolymer of low molecular mass has low viscosity and operation convenience, but cannot prepare polyurethane products with excellent performance and suitable curing period; the polyurethane prepolymer of high molecular mass is suitable for the preparation of high-performance polyurethane products, but has high viscosity and operation difficulty; the addition of solvents can reduce viscosity and facilitate operation, but also brings high VOC, and the subsequent step of solvent removal also greatly prolongs the processing period.

Therefore, it is an urgent problem to be solved in this field to develop a polyurethane pre polymer with excellent performance, low viscosity and operation convenience.

### SUMMARY

The present application provides a polyurethane prepolymer composition, a preparation method therefor and use thereof. Based on the design of the aliphatic isocyanate and the formed prepolymer, the polyurethane prepolymer composition has both high molecular mass and low viscosity, exhibits excellent workability, and the physical properties of polyurethane products prepared therefrom are significantly improved.

In a first aspect, the present application provides a polyurethane prepolymer composition. The polyurethane prepolymer composition is terminated by aliphatic isocyanate and prepared by reacting aliphatic isocyanate with polyol, wherein 1,5-pentamethylene diisocyanate has a mass percentage of ≥50% in the aliphatic isocyanate; the polyurethane prepolymer composition includes a combination of a first prepolymer and a second prepolymer, wherein the first prepolymer is an adduct formed by the aliphatic isocyanate and the polyol in a molar ratio of 2:1, and the second prepolymer is an adduct formed by the aliphatic isocyanate and the polyol in a molar ratio of (n+1):n, wherein n≥2; and the second prepolymer has a mass percentage of 15-75% in the polyurethane prepolymer composition.

In the present application, the aliphatic isocyanate including ≥50% of 1,5-pentamethylene diisocyanate (PDI) reacts with the polyol to form a prepolymer, which can effectively reduce the symmetry and crystallinity of the prepolymer molecular structure, and thereby the polyurethane prepolymer composition has both a large molecular mass and greatly reduced viscosity, and has good fluidity and excellent workability.

The polyurethane prepolymer composition includes a combination of a first prepolymer and a second prepolymer, wherein the first prepolymer is an adduct formed by the aliphatic isocyanate and the polyol in a molar ratio of 2:1, which can be abbreviated as "ABA structure" (also known as "having one chain section"), wherein A represents isocyanate and B represents polyol; and the first prepolymer is a prepolymer with a low molecular mass;
the second prepolymer is an adduct formed by the aliphatic isocyanate and the polyol in a molar ratio of (n+1):n, wherein n≥2, for example, n may be 3, 4, 5, etc.; when n is 2, the corresponding prepolymer is abbreviated as "ABABA structure" (also known as "having two chain sections"); when n is 3, the corresponding prepolymer is abbreviated as "ABABABA structure" (also known as "having three chain sections"); and so on. The second prepolymer is a prepolymer having two or more chain sections, which has a high molecular mass.

In the present application, based on the special design of aliphatic isocyanate, the prepolymer formed by reacting the aliphatic isocyanate with polyol can possess a significantly reduced viscosity; hence, the problem in the prior art that the system has an overly large viscosity and cannot flow at room temperature brought by increasing the formula content of prepolymer having two or more chain sections (such as ABABA structure, ABABABA structure, etc.) when other isocyanates are used is solved. Besides having a high content of the second prepolymer having two or more chain sections with a large molecular mass, the polyurethane prepolymer composition also has low viscosity, good fluidity and excellent workability, and moreover, the removal step of free aliphatic isocyanate monomers in the preparation process is simplified and the removal period is shorten. It is surprisingly found that in the polyurethane prepolymer composition prepared from the aliphatic isocyanate containing 1,5-pentamethylene diisocyanate, the second prepolymer having two or more chain sections in a particular content range can greatly increase the degree of microphase separation in polyurethane, and thusly increase the physical crosslinking degree, and further significantly improve the product performance. By using the polyurethane prepolymer composition to prepare polyurethane products, the polyurethane products can be effectively improved in physical and mechanical properties, and in particular, enhanced in the low-temperature flexibility greatly.

In the polyurethane prepolymer composition of the present application, the second prepolymer has a mass percentage of 15-75%, which may be, for example, 20%, 25%, 30%, 35%, 40%, 45%, 50%, 55%, 60%, 65% or 70%, or specific point values between the above point values. For the space limitation and conciseness, the specific point values included in the range will not be listed exhaustively in the present application.

Preferably, 1,5-pentamethylene diisocyanate has a mass percentage of 50-100% in the aliphatic isocyanate, which may be, for example, 55%, 60%, 65%, 70%, 75%, 80%, 85%, 90%, 95% or 100%, or specific point values between the above point values. For the space limitation and conciseness, the specific point values included in the range will not be listed exhaustively in the present application. The mass percentage is more preferably 60-100%.

In the present application, the aliphatic isocyanate includes linear aliphatic isocyanate and may also include cyclic aliphatic (also known as alicyclic) isocyanate.

Preferably, the aliphatic isocyanate further includes any one or a combination of at least two of 1,6-hexamethylene diisocyanate (HDI), isophorone diisocyanate (IPDI), cyclohexane diisocyanate (CHDI), dicyclohexylmethane diisocyanate (HMDI), and bis(isocyanatomethyl)cyclohexane (H6XDI).

Preferably, the polyol has an average functionality of 2, and the polyol may be any polyol with an average functionality of 2 known in the art.

Preferably, the polyol has a number average molecular mass of 300-12000 g/mol, which may be, for example, 400 g/mol, 500 g/mol, 700 g/mol, 900 g/mol, 1000 g/mol, 1200 g/mol, 1500 g/mol, 1800 g/mol, 2000 g/mol, 2200 g/mol, 2500 g/mol, 2800 g/mol, 3000 g/mol, 4000 g/mol, 5000 g/mol, 7000 g/mol, 9000 g/mol, 10000 g/mol or 11000 g/mol, or specific point values between the above point values. For the space limitation and conciseness, the specific point values included in the range will not be listed exhaustively in the present application. The number average molecular mass is more preferably 300-3000 g/mol.

Preferably, the polyol includes any one or a combination of at least two of polyester polyol, polycaprolactone polyol, polycarbonate polyol, polyethylene oxide polyol, polypropylene oxide polyol, ethylene oxide/propylene oxide copolymer polyol, polytetrahydrofuran polyol, poly(1,3- propylene glycol) polyol, and vegetable oil polyol.

Exemplarily, the polyester polyol is prepared by dicarboxylic acid (preferably aliphatic dicarboxylic acid) and/or anhydride and excess diol; the polycaprolactone polyol is prepared by using ε-caprolactone and a polyol compound with an average functionality of 2 as initiators; the polyethylene oxide polyol is prepared by ethylene oxide and a polyol compound with an average functionality of 2; the polypropylene oxide polyol is prepared by propylene oxide and a polyol compound with an average functionality of 2; the ethylene oxide/propylene oxide copolymer polyol is prepared by ethylene oxide, propylene oxide and a polyol compound with an average functionality of 2.

Preferably, the aliphatic isocyanate and the polyol have a molar ratio of (2.2-15):1, which may be, for example, 2.3:1, 2.5:1, 2.8:1, 3:1, 4:1, 5:1, 6:1, 7:1, 8:1, 9:1, 10:1, 11:1, 12:1, 13:1, 14:1, etc.

Preferably, free aliphatic isocyanate monomers have a mass percentage of ≤5% in the polyurethane prepolymer composition, which may be, for example, 0.001%, 0.005%, 0.01%, 0.05%, 0.1%, 0.5%, 0.8%, 1%, 1.5%, 2%, 2.5%, 3%, 3.5%, 4% or 4.5%, or specific point values between the above point values. For the space limitation and conciseness, the specific point values included in the range will not be listed exhaustively in the present application. The mass percentage is more preferably ≤0.5%, and further preferably ≤0.3%.

Preferably, an NCO group has a mass percentage of 2.5-15% in the polyurethane prepolymer composition, which may be, for example, 3%, 4%, 5%, 6%, 7%, 8%, 9%, 10%, 11%, 12%, 13% or 14%, or specific point values between the above point values. For the space limitation and conciseness, the specific point values included in the range will not be listed exhaustively in the present application.

Preferably, the first prepolymer has a mass percentage of 20-80% in the polyurethane prepolymer composition, which may be, for example, 25%, 30%, 35%, 40%, 45%, 50%, 55%, 60%, 65%, 70% or 75%, or specific point values between the above point values. For the space limitation and conciseness, the specific point values included in the range will not be listed exhaustively in the present application. The mass percentage is more preferably 20-60%.

Preferably, the second prepolymer includes a combination of a third prepolymer and a fourth prepolymer;
wherein the third prepolymer is an adduct formed by the aliphatic isocyanate and the polyol in a molar ratio of 3:2, abbreviated as "ABABA structure", also named as "having two chain sections";
the fourth prepolymer is an adduct formed by the aliphatic isocyanate and the polyol in a molar ratio of (n₁+1):n₁ , wherein n₁≥3; for example, n₁ is 3, 4, 5, etc.; and the fourth prepolymer has more than two chain sections, which can also be understood as " having three or more chain sections"; and
the third prepolymer has a mass percentage of 12-60% in the polyurethane prepolymer composition, which may be, for example, 15%, 18%, 20%, 22%, 25%, 28%, 30%, 32%, 35%, 38%, 40%, 42%, 45%, 48%, 50%, 52%, 55% or 58%, or specific point values between the above point values. For the space limitation and conciseness, the specific point values included in the range will not be listed exhaustively in the present application. The mass percentage is more preferably 35-60%, and further preferably 40-60%.

Preferably, the fourth prepolymer has a mass percentage of 3-25% in the polyurethane prepolymer composition, which may be, for example, 4%, 5%, 7%, 9%, 10%, 12%, 15%, 18%, 20%, 22% or 24%, or specific point values between the above point values. For the space limitation and conciseness, the specific point values included in the range will not be listed exhaustively in the present application.

As a preferred technical solution of the present application, the polyurethane prepolymer composition includes a combination of the first prepolymer (having on chain section), the third prepolymer (having two chain sections) and the fourth prepolymer (having more than two chain sections). By combining prepolymers with different numbers of chain sections/different molecular mass, the polyurethane prepolymer composition has a high molecular mass and a particular molecular mass distribution, and has low viscosity, good fluidity at room temperature, and operation convenience; when used in the preparation of polyurethane products, based on its high molecular mass and particular molecular mass distribution, the polyurethane prepolymer composition has a higher degree of microphase separation, greatly increases the degree of physical crosslinking, and endows the polyurethane products with excellent physical and mechanical properties and especially excellent low-temperature flexibility.

Preferably, the polyurethane prepolymer composition has a viscosity of ≤20000 mPa·s at 25°C, which may be, for example, 1000 mPa·s, 2000 mPa·s, 3000 mPa·s, 4000 mPa·s, 5000 mPa·s, 6000 mPa·s, 7000 mPa·s, 8000 mPa·s, 9000 mPa·s, 10000 mPa·s, 12000 mPa·s, 15000 mPa·s or 18000 mPa·s, or specific point values between the above point values. For the space limitation and conciseness, the specific point values included in the range will not be listed exhaustively in the present application. The viscosity is more preferably ≤10000 mPa·s, and further preferably ≤8000 mPa·s.

In a second aspect, the present application provides a preparation method for the polyurethane prepolymer composition as described in the first aspect; the preparation method includes: subjecting the aliphatic isocyanate and the polyol to a reaction to obtain the polyurethane prepolymer composition.

Preferably, the reaction is performed with or without a catalyst.

Preferably, the catalyst is a compound that promotes carbamate formation, including any one or a combination of at least two of tertiary amine, an alcoholamine compound, *N,N',N*"-tris(dialkylaminoalkyl)hexahydrotriazine, bis(dimethylaminoethyl) ether, a metal salt, amidine, tetraalkylammonium hydroxide, alkali metal hydroxide, alkali metal alkoxide, and a C10-C20 fatty acid salt of alkali metal.

Exemplarily, the tertiary amine includes any one or a combination of at least two of triethylamine, tributylamine, dimethylbenzylamine, diethylbenzylamine, pyridine, methylpyridine, dicyclohexylmethylamine, dimethylcyclohexylamine, *N,N,N*',*N*'-tetramethyldiaminodiethyl ether, bis(dimethylaminopropyl)urea, N-methylmorpholine, *N*-ethylmorpholine, *N*-cyclohexylmorpholine, *N,N,N',N'*-tetramethylethylenediamine, *N,N,N',N*-tetramethyl-1,3-butanediamine, *N,N,N',N'*-tetramethyl-1,6-hexanediamine, pentamethyldiethylenetriamine, *N-*methylpiperidine, *N*-dimethylaminoethylpiperidine, *N,N*'-dimethylpiperazine, *N*-methyl-*N*'-dimethylaminopiperazine, 1,8-diazabicyclo[5.4.0]undec-7-ene (DBU), 1,2-dimethylimidazole, 2-methylimidazole, *N,N*-dimethylimidazole-β-phenylethylamine, 1,4-diazabicyclo[2.2.2]octane, and bis(*N,N*-dimethylaminoethyl) adipate.

Exemplarily, the alcoholamine compound includes any one or a combination of at least two of triethanolamine, triisopropanolamine, *N*-methyldiethanolamine*, N*-ethyldiethanolamine, dimethylaminoethanol, and 2-(*N,N*-dimethylaminoethoxy)ethanol.

Exemplarily, the *N,N',N*"-tris(dialkylaminoalkyl)hexahydrotriazine includes *N,N* '*N*"-tris(dimethylaminopropyl)-s-hexahydrotriazine.

Exemplarily, the metal salt includes an organic metal salt and/or an inorganic metal salt, wherein metal of the metal salt includes any one of iron, lead, bismuth, zinc, and tin, for example, including but not limited to any one or a combination of at least two of: iron (II) chloride, iron (III) chloride, bismuth (III) 2-ethylhexanoate, bismuth (III) octanoate, bismuth (III) neodecanoate, zinc chloride, zinc 2-ethylhexanoate, tin (II) octanoate, tin (II) ethylhexanoate, tin (II) palmitate, dibutyltin (IV) dilaurate, (DBTL), dibutyltin (IV) dichloride, and lead octanoate.

Exemplarily, the amidine includes 2,3-dimethyl-3,4,5,6-tetrahydropyrimidine.

Exemplarily, the tetraalkylammonium hydroxide includes tetramethylammonium hydroxide and/or tetraethylammonium hydroxide.

Exemplarily, the alkali metal hydroxide includes sodium hydroxide and/or potassium hydroxide.

Exemplarily, the alkali metal alkoxide includes any one or a combination of at least two of sodium methoxide, sodium ethoxide, potassium isopropoxide, and sodium isopropoxide.

Exemplarily, the C10-C20 fatty acid salt of alkali metal may be C11, C12, C13, C14, C15, C16, C17, C18, or C19 long-chain fatty acid salts of alkali metal, and may contain an optional side -OH group.

Preferably, based on a total mass of the aliphatic isocyanate and the polyol being 100%, the catalyst is ≤5% by mass, which may be, for example, 0% (not added), 0.1%, 0.3%, 0.5%, 0.7%, 0.9%, 1%, 1.5%, 2%, 2.5%, 3%, 3.5%, 4% or 4.5%, or specific point values between the above point values. For the space limitation and conciseness, the specific point values included in the range will not be listed exhaustively in the present application. More preferably, the catalyst is ≤1% by mass.

Preferably, the catalyst is added before the reaction or at any time during the reaction.

In the present application, the reaction is performed with or without a solvent, preferably without a solvent.

Preferably, the solvent can be any suitable solvent which is inert to reactive groups of the starting components, for example, including but not limited to any one or a combination of at least two of: ethyl acetate, butyl acetate, glycol monomethyl ether acetate, glycol monomethyl ether acetate, 1-methoxypropyl-2-acetate, 3-methoxy-n-butyl acetate, acetone, 2-butanone, 4-methyl-2-pentanone, cyclohexanone, toluene, xylene, chlorobenzene, a petroleum solvent, an aromatic solvent with higher substitution, propylene glycol diacetate, diethylene glycol dimethyl ether, dipropylene glycol dimethyl ether, diglycol monoethyl ether acetate, diglycol monobutyl ether acetate, *N*-methylpyrrolidone, *N*-methylcaprolactam, and *N,N-*dimethylformamide.

Preferably, the reaction is performed at a temperature of 60-120°C, which may be, for example, 65°C, 70°C, 75°C, 80°C, 85°C, 90°C, 95°C, 100°C, 105°C, 110°C or 115°C, or specific point values between the above point values. For the space limitation and conciseness, the specific point values included in the range will not be listed exhaustively in the present application.

Preferably, the reaction is performed for a period of 2-10 h, which may be, for example, 2.5 h, 3 h, 3.5 h, 4 h, 4.5 h, 5 h, 5.5 h, 6 h, 6.5 h, 7 h, 7.5 h, 8 h, 8.5 h, 9 h or 9.5 h, or specific point values between the above point values. For the space limitation and conciseness, the specific point values included in the range will not be listed exhaustively in the present application.

Preferably, the reaction is performed in a protective atmosphere.

Preferably, the protective atmosphere includes any one or a combination of at least two of a nitrogen atmosphere, an argon atmosphere, and a helium atmosphere.

Preferably, a reaction inhibitor is added when the reaction reaches an end point.

As a preferred technical solution of the present application, during the reaction, the NCO content of the system is determined according to the method in standard "GB/T 33312-2016". The NCO content decreasing to the theoretical value or lower means that the reaction has reached the end point, at which time the reaction inhibitor is added to the system; the reaction inhibitor is a substance which inhibits the isocyanate group from further reacting with the isocyanate group, the carbamate group, etc., and accordingly, the obtained polyurethane prepolymer composition can remain stable.

Preferably, the reaction inhibitor includes any one or a combination of at least two of an inorganic acid, an acyl chloride compound, a sulfonic acid compound, a sulfonate compound, monoalkyl phosphate, dialkyl phosphate, and an acidic compound containing a silyl group, and more preferably the acyl chloride compound.

Preferably, the inorganic acid includes any one or a combination of at least two of hydrochloric acid, phosphorous acid, and phosphoric acid.

Preferably, the acyl chloride compound includes any one or a combination of at least two of acetyl chloride, benzoyl chloride, and isophthaloyl chloride, and more preferably benzoyl chloride.

Preferably, the sulfonic acid compound includes any one or a combination of at least two of methanesulfonic acid, *p*-toluenesulfonic acid, trifluoromethanesulfonic acid, perfluorobutanesulfonic acid, and dodecylbenzenesulfonic acid.

Preferably, the sulfonate compound includes methyl *p*-toluenesulfonate and/or ethyl *p*-toluenesulfonate.

Preferably, the monoalkyl phosphate includes monotridecyl phosphate.

Preferably, the dialkyl phosphate includes any one or a combination of at least two of dibutyl phosphate, dioctyl phosphate, and bis(2-ethylhexyl) phosphate.

Preferably, the acidic compound containing a silyl group includes any one or a combination of at least two of trimethylsilyl methanesulfonate, trimethylsilyl trifluoromethanesulfonate, tris(trimethylsilyl) phosphate, and diethyl trimethylsilyl phosphate.

Preferably, based on a total mass of the aliphatic isocyanate and the polyol being 100%, the reaction inhibitor is 1-200 ppm by mass, which may be, for example, 5 ppm, 10 ppm, 20 ppm, 30 ppm, 40 ppm, 50 ppm, 70 ppm, 90 ppm, 100 ppm, 110 ppm, 130 ppm, 150 ppm, 170 ppm, or 190 ppm, or specific point values between the above point values. For the space limitation and conciseness, the specific point values included in the range will not be listed exhaustively in the present application. More preferably, the reaction inhibitor is 2-80 ppm by mass.

Preferably, after the reaction is completed, the preparation method further includes a step of post-treatment, and the post-treatment can reduce the content of free aliphatic isocyanate monomers in the system.

Preferably, the post-treatment includes any one or a combination of at least two of reduced-pressure distillation, solvent-assisted distillation, co-distillation, wiped film evaporation, and extraction, and more preferably the reduced-pressure distillation.

In the present application, based on the selection and special design of the aliphatic isocyanate, the obtained prepolymer has a high molecular mass and extremely low viscosity; the removal process of free aliphatic isocyanate monomers in the system is simplified and the removal period is shorten, and an excellent removal effect can be realized by the reduced-pressure distillation which has a simple process, wherein the content of free aliphatic isocyanate monomers is ≤0.3% in the obtained polyurethane prepolymer composition.

Preferably, the extraction includes molecular sieve extraction and/or solvent extraction.

Preferably, the reduced-pressure distillation is membrane or stirring membrane distillation under vacuum.

In a preferred technical solution of the present application, the aliphatic isocyanate is 1,5-pentamethylene diisocyanate (PDI), and the polyurethane prepolymer composition is prepared by the preparation method described hereinbefore.

In another preferred technical solution of the present application, the aliphatic isocyanate is a mixture of PDI and other aliphatic isocyanates, and the mass percentage of PDI is ≥50%; the preparation method for the polyurethane prepolymer composition includes method A or method B.

The method A includes: subjecting the aliphatic isocyanate (a mixture of PDI and other aliphatic isocyanates) and the polyol to a reaction and optional post-treatment by the methods described hereinbefore to obtain the polyurethane prepolymer composition.

The method B includes: subjecting the PDI and the polyol to a reaction and optional post-treatment by the methods described hereinbefore to obtain prepolymer A; subjecting another aliphatic isocyanate and the polyol to a reaction and optional post-treatment by the methods described hereinbefore to obtain prepolymer B; and uniformly mixing the prepolymer A and the prepolymer B to obtain the polyurethane prepolymer composition.

In a third aspect, the present application provides a curable polyurethane composition. The curable polyurethane composition includes the polyurethane prepolymer composition as described in the first aspect and a curing agent.

Preferably, the curing agent includes polyamine and/or polyol.

Preferably, the polyol includes any one or a combination of at least two of polyester polyol, polyether polyol and small-molecule polyol.

Preferably, the small-molecule polyol includes 1,4-butanediol (BDO) and/or hydroquinone bis(2-hydroxyethyl) ether (HQEE).

Preferably, the polyurethane prepolymer composition and the curing agent have a molar ratio of (1-1.1):1, which may be, for example, 1.01:1, 1.02:1, 1.03:1, 1.04:1, 1.05:1, 1.06:1, 1.07:1, 1.08:1 or 1.09:1.

Preferably, the curable polyurethane composition further includes a catalyst.

Preferably, the catalyst has the same selection range as described hereinbefore, and the catalyst is more preferably a metal salt, which may be, for example, any one or a combination of at least two of: iron (II) chloride, iron (III) chloride, bismuth (III) 2-ethylhexanoate, bismuth (III) octanoate, bismuth (III) neodecanoate, zinc chloride, zinc 2-ethylhexanoate, tin (II) octanoate, tin (II) ethylhexanoate, tin (II) palmitate, dibutyltin (IV) dilaurate, (DBTL), dibutyltin (IV) dichloride, and lead octanoate.

Preferably, based on based on a total mass of the polyurethane prepolymer composition and the curing agent being 100%, the catalyst is ≤5% by mass, which may be, for example, 0.001%, 0.005%, 0.01%, 0.05%, 0.1%, 0.3%, 0.5%, 0.7%, 0.9%, 1%, 1.5%, 2%, 2.5%, 3%, 3.5%, 4% or 4.5%, or specific point values between the above point values. For the space limitation and conciseness, the specific point values included in the range will not be listed exhaustively in the present application. The catalyst is more preferably ≤1% by mass, and further preferably ≤0.1% by mass.

In a fourth aspect, the present application provides a polyurethane product, wherein a raw material for preparing the polyurethane product includes the polyurethane prepolymer composition as described in the first aspect and/or the curable polyurethane composition as described in the second aspect.

Preferably, the polyurethane product includes any one of a polyurethane elastomer, a polyurethane adhesive, a polyurethane sealant, a polyurethane foam, a polyurethane coating, and a polyurethane adhesive film.

Compared with the prior art, the present application has the beneficial effects below.
(1) For the polyurethane prepolymer composition provided by the present application, based on the special design of aliphatic isocyanate, the prepolymer formed by reacting the aliphatic isocyanate with polyol can possess a significantly reduced viscosity; having a high content of the second prepolymer with a large molecular mass, the polyurethane prepolymer composition has low viscosity, good fluidity and excellent workability, and moreover, the removal step of free aliphatic isocyanate monomers in the preparation process is simplified and the removal period is shorten. When used in the preparation of polyurethane products, the polyurethane prepolymer composition has excellent workability and suitable curing period, and can effectively improve the physical and mechanical properties of polyurethane products.
(2) The polyurethane adhesive film prepared from the polyurethane prepolymer composition has significantly improved physical properties, such as high tensile strength, high elongation, high hardness, and good flexibility. The obtained polyurethane product can withstand flexing for more than 15000 times at a low temperature of -20°C without cracking, and can even withstand flexing for more than 20000 to 30000 times at -20°C without cracking, having excellent low-temperature flexibility.

### DETAILED DESCRIPTION

The technical solutions of the present application are further described below in terms of specific embodiments. It should be apparent to those skilled in the art that the embodiments are only used for a better understanding of the present application and should not be regarded as specific limitations to the present application.

As used herein, the terms "containing", "comprising", "having", "including", or any other variation thereof are intended to cover a non-exclusive inclusion. For example, the composition, process, method, product or apparatus including the listed elements is not necessarily limited to those elements but may include other elements not expressly listed or inherent elements of such composition, process, method, product or apparatus.

The terms "optional " or "any one" means that the followed described matter or event may or may not occur, and such description includes instances where the event occurs and instances where the event does not occur.

The indefinite articles "a" and "an" before the elements or components of the present application have no restrictions on the quantity (i.e. the number of occurrences) of the elements or components. Therefore, the terms "a" or "an" should be interpreted as including one or at least one, and the singular form of the elements or components also includes the plural form, unless the quantity obviously refers to the singular form only.

In the present application, features defined by "first", "second", "third", and "fourth" may explicitly or implicitly include one or more of the features, and the terms are used to distinguishingly describe the features without indicating order or importance. In the description of the present application, unless otherwise specified, "a plurality of" means two or more.

In the following specific embodiments of the present application, the aliphatic isocyanate, polyol, and small-molecule polyol used are all commercially available chemicals, and the polyol involved has an average functionality of 2, specifically:
Polypropylene oxide polyol, PPG1000, with a hydroxyl value of 112 mg KOH/g, Wanol C2010D, purchased from Wanhua Chemical;
Polycaprolactone polyol, CAPA2101A, with a hydroxyl value of 110.2 mg KOH/g, purchased from Ingevity, USA;
Polytetrahydrofuran polyol, PTMEG1000, with a hydroxyl value of 112 mg KOH/g, purchased from Jiaxing Hyosung Chemical;
Poly(neopentyl glycol hexanediol adipate) copolyester polyol, XCP-1000NH, with a hydroxyl value of 109.9 mg KOH/g, purchased from Xuchuan Chemical.

In the present application, test methods for the components and properties of the polyurethane prepolymer composition are as follows:

### 1. Test of the contents of the first prepolymer, the third prepolymer and the fourth prepolymer in the polyurethane prepolymer composition

The content of each prepolymer in the polyurethane prepolymer composition is measured by gel chromatography, and the specific conditions are as follows:
Instrument: Waters 150C ALC/GPC gel chromatograph
730 Data Module Data Processing System
Chromatographic column: µ-Bondagel E 100, E linear, E 125 three columns connected in series
Mobile phase: dimethylformamide + 3 g/L NaNO₃
Measurement temperature: 45°C
Flow rate: 0.5 mL/min
Sample concentration: 1 mg/mL
Injection volume: 80 µL

The sum of the contents of the third prepolymer and the fourth prepolymer is equal to the content of the second prepolymer.

### 2. Test of the NCO content of the polyurethane prepolymer composition

The NCO content of the polyurethane prepolymer composition is tested according to the method in standard GB/T 33312-2016.

### 3. Test of the content of free aliphatic isocyanate monomers in the polyurethane prepolymer composition

The content of free isocyanate in the polyurethane prepolymer composition is tested according to the method in standard GB/T18446-2009 (GC method).

### 4. Test of the viscosity of the polyurethane prepolymer composition

The viscosity is tested at 25°C according to the method in standard GB/T 2794-2013.

### Example 1

A polyurethane prepolymer composition and a preparation method therefor are provided. The polyurethane prepolymer composition is prepared by reacting polyol PPG1000 with 1,5-pentamethylene diisocyanate (PDI). The preparation method is as follows:
Under nitrogen protection, 1540 g of PDI was added to a reactor and heated to 50°C, and added with 1000 g of polyol PPG1000 once; the reaction was performed at 80°C until NCO was ≤29.76%. A reaction inhibitor of benzoyl chloride was added by 50 ppm in total to terminate the reaction; finally, residual PDI monomers were removed from the reaction product by membrane distillation under reduced pressure to reach a residual PDI level of less than 0.3wt.%; the reaction product was cooled and discharged to obtain the polyurethane prepolymer composition. The composition information is as follows:

| | |
|---|---|
| Viscosity (25°C, mPa·s) | 2136 |
| Content of free aliphatic isocyanate monomers (%) | 0.21 |
| NCO content (%) | 4.77 |
| Content of the first prepolymer (%, having one chain section) | 48.07 |
| Content of the third prepolymer (%, having two chain sections) | 45.2 |
| Content of the fourth prepolymer (%, having more than two chain sections) | 6.73 |

### Example 2

A polyurethane prepolymer composition and a preparation method therefor are provided. The polyurethane prepolymer composition is prepared by reacting polyol CAPA2101A with PDI. The preparation method is as follows:
Under nitrogen protection, 1540 g of PDI was added to a reactor and heated to 50°C, and added with 1000 g of polyol CAPA2101A once; the reaction was performed at 80°C until NCO was ≤29.82%. A reaction inhibitor of benzoyl chloride was added by 50 ppm in total to terminate the reaction; finally, residual PDI monomers were removed from the reaction product by membrane distillation under reduced pressure to reach a residual PDI level of less than 0.3wt.%; the reaction product was cooled and discharged to obtain the polyurethane prepolymer composition. The composition information is as follows:

| | |
|---|---|
| Viscosity (25°C, mPa·s) | 3612 |
| Content of free aliphatic isocyanate monomers (%) | 0.18 |
| NCO content (%) | 4.95 |
| Content of the first prepolymer (%, having one chain section) | 55.37 |
| Content of the third prepolymer (%, having two chain sections) | 40.16 |
| Content of the fourth prepolymer (%, having more than two chain sections) | 4.47 |

### Example 3

A polyurethane prepolymer composition and a preparation method therefor are provided. The polyurethane prepolymer composition is prepared by reacting polyol PTMEG1000 with PDI. The preparation method is as follows:
Under nitrogen protection, 1540 g of PDI was added to a reactor and heated to 50°C, and added with 1000 g of polyol PTMEG1000 once; the reaction was performed at 80°C until NCO was ≤29.76%. A reaction inhibitor of benzoyl chloride was added by 50 ppm in total to terminate the reaction; finally, residual PDI monomers were removed from the reaction product by membrane distillation under reduced pressure to reach a residual PDI level of less than 0.3wt.%; the reaction product was cooled and discharged to obtain the polyurethane prepolymer composition. The composition information is as follows:

| | |
|---|---|
| Viscosity (25°C, mPa·s) | 2188 |
| Content of free aliphatic isocyanate monomers (%) | 0.23 |
| NCO content (%) | 5.01 |
| Content of the first prepolymer (%, having one chain section) | 58.69 |
| Content of the third prepolymer (%, having two chain sections) | 28.11 |
| Content of the fourth prepolymer (%, having more than two chain sections) | 13.2 |

### Example 4

A polyurethane prepolymer composition and a preparation method therefor are provided. The polyurethane prepolymer composition is prepared by reacting polyol XCP-1000NH with PDI. The preparation method is as follows:
Under nitrogen protection, 1540 g of PDI was added to a reactor and heated to 50°C, and added with 1000 g of polyol XCP-1000NH once; the reaction was performed at 80°C until NCO was ≤30.04%. A reaction inhibitor of benzoyl chloride was added by 50 ppm in total to terminate the reaction; finally, residual PDI monomers were removed from the reaction product by membrane distillation under reduced pressure to reach a residual PDI level of less than 0.3wt.%; the reaction product was cooled and discharged to obtain the polyurethane prepolymer composition. The composition information is as follows:

| | |
|---|---|
| Viscosity (25°C, mPa·s) | 3892 |
| Content of free aliphatic isocyanate monomers (%) | 0.16 |
| NCO content (%) | 4.95 |
| Content of the first prepolymer (%, having one chain section) | 35.32 |
| Content of the third prepolymer (%, having two chain sections) | 50.89 |
| Content of the fourth prepolymer (%, having more than two chain sections) | 13.79 |

### Example 5

A polyurethane prepolymer composition and a preparation method therefor are provided. The polyurethane prepolymer composition is prepared by reacting polyol PTMEG1000 with PDI and 1,6-hexamethylene diisocyanate (HDI). The preparation method is as follows:
Under nitrogen protection, 840 g of PDI and 840 g of HDI were added to a reactor and heated to 50°C, and added with 1000 g of polyol PTMEG1000 once; the reaction was performed at 80°C until NCO was ≤29.63%. A reaction inhibitor of benzoyl chloride was added by 50 ppm in total to terminate the reaction; finally, residual PDI and HDI monomers were removed from the reaction product by membrane distillation under reduced pressure to reach a residual monomer level of less than 0.3wt.%; the reaction product was cooled and discharged to obtain the polyurethane prepolymer composition. The composition information is as follows:

| | |
|---|---|
| Viscosity (25°C, mPa·s) | 5316 |
| Content of free aliphatic isocyanate monomers (%) | 0.29 |
| NCO content (%) | 4.97 |
| Content of the first prepolymer (%, having one chain section) | 60.38 |
| Content of the third prepolymer (%, having two chain sections) | 22.17 |
| Content of the fourth prepolymer (%, having more than two chain sections) | 17.45 |

### Example 6

A polyurethane prepolymer composition and a preparation method therefor are provided. The polyurethane prepolymer composition is prepared by reacting polyol PTMEG1000 with PDI. The preparation method is as follows:
Under nitrogen protection, 770 g of PDI was added to a reactor and heated to 50°C, and added with 1000 g of polyol PTMEG1000 once; the reaction was performed at 80°C until NCO was ≤18.98%. A reaction inhibitor of benzoyl chloride was added by 50 ppm in total to terminate the reaction; finally, residual PDI monomers were removed from the reaction product by membrane distillation under reduced pressure to reach a residual PDI level of less than 0.3wt.%; the reaction product was cooled and discharged to obtain the polyurethane prepolymer composition. The composition information is as follows:

| | |
|---|---|
| Viscosity (25°C, mPa·s) | 4327 |
| Content of free aliphatic isocyanate monomers (%) | 0.24 |
| NCO content (%) | 3.75 |
| Content of the first prepolymer (%, having one chain section) | 26.06 |
| Content of the third prepolymer (%, having two chain sections) | 51.69 |
| Content of the fourth prepolymer (%, having more than two chain sections) | 22.25 |

### Example 7

A polyurethane prepolymer composition and a preparation method therefor are provided. The polyurethane prepolymer composition is prepared by reacting polyol PTMEG1000 with PDI. The preparation method is as follows:
Under nitrogen protection, 2310 g of PDI was added to a reactor and heated to 50°C, and added with 1000 g of polyol PTMEG1000 once; the reaction was performed at 80°C until NCO was ≤35.53%. A reaction inhibitor of benzoyl chloride was added by 50 ppm in total to terminate the reaction; finally, residual PDI monomers were removed from the reaction product by membrane distillation under reduced pressure to reach a residual PDI level of less than 0.3wt.%; the reaction product was cooled and discharged to obtain the polyurethane prepolymer composition. The composition information is as follows:

| | |
|---|---|
| Viscosity (25°C, mPa·s) | 2040 |
| Content of free aliphatic isocyanate monomers (%) | 0.15 |
| NCO content (%) | 5.65 |
| Content of the first prepolymer (%, having one chain section) | 78.25 |
| Content of the third prepolymer (%, having two chain sections) | 15.33 |
| Content of the fourth prepolymer (%, having more than two chain sections) | 6.42 |

### Comparative Example 1

A polyurethane prepolymer composition and a preparation method therefor are provided. The polyurethane prepolymer composition is prepared by reacting polyol CAPA2101A with HDI. The preparation method is as follows:
Under nitrogen protection, 1680 g of HDI was added to a reactor and heated to 50°C, and added with 1000 g of polyol CAPA2101A once; the reaction was performed at 80°C until NCO was ≤28.33%. A reaction inhibitor of benzoyl chloride was added by 50 ppm in total to terminate the reaction; finally, residual HDI monomers were removed from the reaction product by membrane distillation under reduced pressure to reach a residual HDI level of less than 0.3wt.%; the reaction product was cooled and discharged to obtain the polyurethane prepolymer composition. The composition information is as follows:

| Viscosity (25°C, mPa·s) | No fluidity |
|---|---|
| Content of free aliphatic isocyanate monomers (%) | 0.22 |
| NCO content (%) | 4.69 |
| Content of the first prepolymer (%, having one chain section) | 48.16 |
| Content of the third prepolymer (%, having two chain sections) | 45.57 |
| Content of the fourth prepolymer (%, having more than two chain sections) | 6.27 |

### Comparative Example 2

A polyurethane prepolymer composition and a preparation method therefor are provided. The polyurethane prepolymer composition is prepared by reacting polyol PTMEG1000 with HDI. The preparation method is as follows:
Under nitrogen protection, 1680 g of HDI was added to a reactor and heated to 50°C, and added with 1000 g of polyol PTMEG1000 once; the reaction was performed at 80°C until NCO was ≤28.69%. A reaction inhibitor of benzoyl chloride was added by 50 ppm in total to terminate the reaction; finally, residual HDI monomers were removed from the reaction product by membrane distillation under reduced pressure to reach a residual HDI level of less than 0.3wt.%; the reaction product was cooled and discharged to obtain the polyurethane prepolymer composition. The composition information is as follows:

| Viscosity (25°C, mPa·s) | No fluidity |
|---|---|
| Content of free aliphatic isocyanate monomers (%) | 0.16 |
| NCO content (%) | 4.44 |
| Content of the first prepolymer (%, having one chain section) | 43.79 |
| Content of the third prepolymer (%, having two chain sections) | 38.64 |
| Content of the fourth prepolymer (%, having more than two chain sections) | 17.57 |

### Comparative Example 3

A polyurethane prepolymer composition and a preparation method therefor are provided. The polyurethane prepolymer composition is prepared by reacting polyol XCP-1000NH with HDI. The preparation method is as follows:
Under nitrogen protection, 1680 g of HDI was added to a reactor and heated to 50°C, and added with 1000 g of polyol XCP-1000NH once; the reaction was performed at 80°C until NCO was ≤29.72%. A reaction inhibitor of benzoyl chloride was added by 50 ppm in total to terminate the reaction; finally, residual HDI monomers were removed from the reaction product by membrane distillation under reduced pressure to reach a residual HDI level of less than 0.3wt.%; the reaction product was cooled and discharged to obtain the polyurethane prepolymer composition. The composition information is as follows:

| | |
|---|---|
| Viscosity (25°C, mPa·s) | 8920 |
| Content of free aliphatic isocyanate monomers (%) | 0.21 |
| NCO content (%) | 4.40 |
| Content of the first prepolymer (%, having one chain section) | 38.66 |
| Content of the third prepolymer (%, having two chain sections) | 51.01 |
| Content of the fourth prepolymer (%, having more than two chain sections) | 10.33 |

### Comparative Example 4

A polyurethane prepolymer composition and a preparation method therefor are provided. The polyurethane prepolymer composition is prepared by reacting polyol PTMEG1000 with HDI. The preparation method is as follows:
Under nitrogen protection, 840 g of HDI was added to a reactor and heated to 50°C, and added with 1000 g of polyol PTMEG1000 once; the reaction was performed at 80°C until NCO was ≤18.26%. A reaction inhibitor of benzoyl chloride was added by 50 ppm in total to terminate the reaction; finally, residual HDI monomers were removed from the reaction product by membrane distillation under reduced pressure to reach a residual HDI level of less than 0.3wt.%; the reaction product was cooled and discharged to obtain the polyurethane prepolymer composition. The composition information is as follows:

| Viscosity (25°C, mPa·s) | No fluidity |
|---|---|
| Content of free aliphatic isocyanate monomers (%) | 0.21 |
| NCO content (%) | 3.77 |
| Content of the first prepolymer (%, having one chain section) | 23.44 |
| Content of the third prepolymer (%, having two chain sections) | 52.36 |
| Content of the fourth prepolymer (%, having more than two chain sections) | 24.20 |

### Comparative Example 5

A polyurethane prepolymer composition and a preparation method therefor are provided. The polyurethane prepolymer composition is prepared by reacting polyol PTMEG1000 with HDI. The preparation method is as follows:
Under nitrogen protection, 2790 g of HDI was added to a reactor and heated to 50°C, and added with 1000 g of polyol PTMEG1000 once; the reaction was performed at 80°C until NCO was ≤34.59%. A reaction inhibitor of benzoyl chloride was added by 50 ppm in total to terminate the reaction; finally, residual HDI monomers were removed from the reaction product by membrane distillation under reduced pressure to reach a residual HDI level of less than 0.3wt.%; the reaction product was cooled and discharged to obtain the polyurethane prepolymer composition. The composition information is as follows:

| Viscosity (25°C, mPa·s) | Paste without fluidity |
|---|---|
| Content of free aliphatic isocyanate monomers (%) | 0.13 |
| NCO content (%) | 5.75 |
| Content of the first prepolymer (%, having one chain section) | 83.56 |
| Content of the third prepolymer (%, having two chain sections) | 11.87 |
| Content of the fourth prepolymer (%, having more than two chain sections) | 4.57 |

### Comparative Example 6

A polyurethane prepolymer composition and a preparation method therefor are provided. The polyurethane prepolymer composition is prepared by reacting polyol PTMEG1000 with 4,4-diphenylmethane diisocyanate (MDI). The preparation method is as follows:
Under nitrogen protection, 550 g of MDI was added to a reactor and heated to 50°C, and added with 1000 g of polyol PTMEG1000 once; the reaction was performed at 80°C until NCO was ≤6.50%. A reaction inhibitor of benzoyl chloride was added by 50 ppm in total to terminate the reaction. The free monomers were difficult to distill off by membrane distillation because of the overly high boiling point of MDI, and because of its low saturated vapor pressure, the free monomers were retained, and the reaction system was cooled and discharged to obtain the polyurethane prepolymer composition. To analyze the components, because the monomer content was overly high, the free monomers were included in the components. The composition information is as follows:

| Viscosity (25°C, mPa·s) | No fluidity |
|---|---|
| Content of free isocyanate monomers (%) | 5.65 |
| NCO content (%) | 6.03 |
| Content of the first prepolymer (%, having one chain section) | 58.96 |
| Content of the third prepolymer (%, having two chain sections) | 30.47 |
| Content of the fourth prepolymer (%, having more than two chain sections) | 10.57 |

### Comparative Example 7

A polyurethane prepolymer composition and a preparation method therefor are provided. The polyurethane prepolymer composition is prepared by reacting polyol PTMEG1000 with 4,4-dicyclohexylmethane diisocyanate (HMDI). The preparation method is as follows:
Under nitrogen protection, 580 g of HMDI was added to a reactor and heated to 50°C, and added with 1000 g of polyol PTMEG1000 once; the reaction was performed at 80°C until NCO was ≤6.45%. A reaction inhibitor of benzoyl chloride was added by 50 ppm in total to terminate the reaction. The free monomers were difficult to distill off by membrane distillation because of the overly high boiling point of HMDI, and because of its low saturated vapor pressure, the free monomers were retained, and the reaction system was cooled and discharged to obtain the polyurethane prepolymer composition. To analyze the components, because the monomer content was overly high, the free monomers were included in the components. The composition information is as follows:

| Viscosity (25°C, mPa·s) | No fluidity |
|---|---|
| Content of free isocyanate monomers (%) | 6.98 |
| NCO content (%) | 6.31 |
| Content of the first prepolymer (%, having one chain section) | 62.26 |
| Content of the third prepolymer (%, having two chain sections) | 20.47 |
| Content of the fourth prepolymer (%, having more than two chain sections) | 17.27 |

### Comparative Example 8

A polyurethane prepolymer composition and a preparation method therefor are provided. The polyurethane prepolymer composition is prepared by reacting polyol PTMEG1000 with isophorone diisocyanate (IPDI). The preparation method is as follows:
Under nitrogen protection, 500 g of IPDI was added to a reactor and heated to 50°C, and added with 1000 g of polyol PTMEG1000 once; the reaction was performed at 80°C until NCO was ≤7.01%. A reaction inhibitor of benzoyl chloride was added by 50 ppm in total to terminate the reaction. The free monomers were difficult to distill off by membrane distillation because of the overly high boiling point of IPDI, and because of its low saturated vapor pressure, the free monomers were retained, and the reaction system was cooled and discharged to obtain the polyurethane prepolymer composition. To analyze the components, because the monomer content was overly high, the free monomers were included in the components. The composition information is as follows:

| | |
|---|---|
| Viscosity (25°C, mPa·s) | 9208 |
| Content of free isocyanate monomers (%) | 5.83 |
| NCO content (%) | 6.69 |
| Content of the first prepolymer (%, having one chain section) | 65.24 |
| Content of the third prepolymer (%, having two chain sections) | 23.39 |
| Content of the fourth prepolymer (%, having more than two chain sections) | 11.37 |

### Comparative Example 9

A polyurethane prepolymer composition and a preparation method therefor are provided. The polyurethane prepolymer composition is prepared by reacting polyol PTMEG1000 with PDI. The preparation method is as follows:
Under nitrogen protection, 340 g of PDI was added to a reactor and heated to 50°C, and added with 1000 g of polyol PTMEG1000 once; the reaction was performed at 80°C until NCO was ≤7.57%. A reaction inhibitor of benzoyl chloride was added by 50 ppm in total to terminate the reaction; finally, residual PDI monomers were removed from the reaction product by membrane distillation under reduced pressure to reach a residual PDI level of less than 0.3wt.%; the reaction product was cooled and discharged to obtain the polyurethane prepolymer composition. The composition information is as follows:

| | |
|---|---|
| Viscosity (25°C, mPa·s) | 29820 |
| Content of free aliphatic isocyanate monomers (%) | 0.12 |
| NCO content (%) | 3.08 |
| Content of the first prepolymer (%, having one chain section) | 12.21 |
| Content of the third prepolymer (%, having two chain sections) | 51.28 |
| Content of the fourth prepolymer (%, having more than two chain sections) | 36.51 |

### Example 8

A polyurethane prepolymer composition and a preparation method therefor are provided. The polyurethane prepolymer composition is prepared by reacting polyol PTMEG1000 with PDI and HMDI. The preparation method is as follows: under nitrogen protection, 400 g of the HMDI polyurethane prepolymer composition prepared in Comparative Example 7 and 600 g of the PDI polyurethane prepolymer composition prepared in Example 3 were fed to a reactor, stirred uniformly at 50°C, cooled and discharged to obtain the polyurethane prepolymer composition. The composition information is as follows:

| | |
|---|---|
| Viscosity (25°C, mPa·s) | 6236 |
| Content of free aliphatic isocyanate monomers (%) | 2.8 |
| NCO content (%) | 5.5 |
| Content of the first prepolymer (%, having one chain section) | 60.06 |
| Content of the third prepolymer (%, having two chain sections) | 25.19 |
| Content of the fourth prepolymer (%, having more than two chain sections) | 14.75 |

### Example 9

A polyurethane prepolymer composition and a preparation method therefor are provided. The polyurethane prepolymer composition is prepared by reacting polyol PTMEG1000 with PDI and IPDI. The preparation method is as follows: under nitrogen protection, 400 g of the IPDI polyurethane prepolymer composition prepared in Comparative Example 8 and 600 g of the PDI polyurethane prepolymer composition prepared in Example 3 were fed to a reactor, stirred uniformly at 50°C, cooled and discharged to obtain the polyurethane prepolymer composition. The composition information is as follows:

| | |
|---|---|
| Viscosity (25°C, mPa·s) | 3062 |
| Content of free aliphatic isocyanate monomers (%) | 2.33 |
| NCO content (%) | 5.65 |
| Content of the first prepolymer (%, having one chain section) | 61.22 |
| Content of the third prepolymer (%, having two chain sections) | 26.29 |
| Content of the fourth prepolymer (%, having more than two chain sections) | 12.49 |

### Application Example

A polyurethane product is provided; raw materials for preparing the product include a polyurethane prepolymer, a curing agent and a catalyst; the polyurethane prepolymer is each of the polyurethane prepolymer compositions provided by Examples 1-9 and Comparative Examples 1-9, the curing agent is 1,4-butanediol, and the catalyst is dibutyltin dilaurate; the preparation method is as follows:
The polyurethane prepolymer composition was preheated to 50°C, added with 1,4-butanediol at a molar ratio of 1.05:1, and additionally added with 0.05% (based on a total mass of the polyurethane prepolymer and the curing agent being 100%) of dibutyltin dilaurate; the mixture was mixed at a high speed under vacuum in a Speedmixer disperser for 60 s; then the mixture was poured into a mold and cured at 80°C for 8 h to obtain the polyurethane product.

The polyurethane product was cut into sample pieces of 300 mm×200 mm×5 mm and sample blocks of 50 mm diameter and 20 mm height, and finally the samples were allowed to stand for 1 week and then subjected to the following tests.
(1) Tensile properties: The tensile properties of the sample pieces to be tested were tested according to the method in standard ASTM D412 to obtain the tensile strength, elongation and modulus at 100% elongation;
(2) Low-temperature flexibility: The test was performed according to the method in standard GB/T 3903.41, the sample pieces were cut as 70 mm × 45 mm × 5 mm, the flexing angle was 22.5°, the speed was 60 times/min, and the temperature was -20°C.
(3) Shore hardness: Shore A hardness and Shore D hardness were tested according to the method in GB/T 2411-2008.

The specific test results are shown in Table 1.

**Table 1**

| Prepolymer | Tensile strength (MPa) | Elongation (%) | Modulus at 100% elongation (MPa) | Shore hardness (A/D) | Low-temperature flexibility |
|---|---|---|---|---|---|
| Example 1 | 30.25 | 550 | 2.21 | A52 | No cracking at the 25000th time |
| Example 2 | 54.33 | 620 | 2.88 | A86 | No cracking at the 25000th time |
| Example 3 | 34.15 | 830 | 1.72 | A70 | No cracking at the 20000th time |
| Example 4 | 56.59 | 412 | 3.71 | A90/D36 | No cracking at the 25000th time |
| Example 5 | 42.74 | 486 | 1.86 | A76 | No cracking at the 20000th time |
| Example 6 | 34.02 | 904 | 1.61 | A68 | No cracking at the 30000th time |
| Example 7 | 28.42 | 965 | 1.74 | A82 | No cracking at the 20000th time |
| Example 8 | 35.62 | 430 | 2.41 | A90/D22 | No cracking at the 15000th time |
| Example 9 | 30.81 | 620 | 2.26 | A78 | No cracking at the 20000th time |
| Comparative Example 1 | 49.69 | 582 | 2.63 | A80 | Cracking at the 20000th time |
| Comparative Example 2 | 26.77 | 734 | 1.58 | A65 | Cracking at the 10000th time |
| Comparative Example 3 | 50.31 | 360 | 3.68 | A90/D32 | Cracking at the 10000th time |
| Comparative Example 4 | 32.8 | 586 | 1.95 | A33 | Cracking at the 10000th time |
| Comparative Example 5 | 23.08 | 683 | 1.53 | A73 | Cracking at the 10000th time |
| Comparative Example 6 | 48.95 | 491 | 3.47 | A90/D31 | Cracking at the 1000th time |
| Comparative Example 7 | 40.06 | 482 | 2.68 | A90/D36 | Cracking at the 2000th time |
| Comparative Example 8 | 36.47 | 550 | 2.33 | A90/D33 | Cracking at the 2000th time |
| Comparative Example 9 | 22.30 | 823 | 1.33 | A52 | Cracking at the 20000th time |

According to the results of performance tests in Table 1, in the present application, by reacting the aliphatic isocyanate containing PDI with polyol to obtain the prepolymer, the polyurethane prepolymer composition has both a large molecular weight and an extremely low viscosity; when used to prepare polyurethane products, the polyurethane prepolymer composition has low working viscosity, excellent workability, and suitable curing period, and the obtained polyurethane products have large tensile strength and high modulus at 100% elongation, good elongation, high hardness, and good flexibility, and the obtained polyurethane products can be flexed for more than 15000 times at a low temperature of -20°C without cracking, or even can be flexed for 20000 to 30000 times at -20°C without cracking, having excellent low-temperature flexibility. The prepolymers of Comparative Examples 1-5 are prepared by reacting HDI with polyol; the regularity of HDI is higher than that of PDI, and thusly HDI is easier to crystallize at low temperature, leading to poor low-temperature flexibility. The prepolymer of Comparative Example 6 is prepared by reacting the aromatic isocyanate MDI with polyol, the prepolymer of Comparative Example 7 is prepared by reacting HMDI with polyol, and the prepolymer of Comparative Example 8 is prepared by reacting IPDI with polyol; the rigidity of MDI, IPDI, and HMDI is high, and a large T_{g} of the hard sections also will lead to a poor low-temperature flexibility. The polyurethane prepolymer composition of Comparative Example 9 contains an excessive amount of the second prepolymer, and thereby the degree of microphase separation is high, the ability of physical crosslinking is reduced, and in turn the mechanical properties of the polyurethane are reduced.

The applicant declares that the polyurethane prepolymer composition, the preparation method therefor and use thereof of the present application are illustrated by the embodiments in the present application, but the present application is not limited to the embodiments, which means that the present application does not necessarily rely on the above-mentioned embodiments to be implemented. Those skilled in the art should understand that any improvement to the present application, the equivalent replacement of each raw material of products and addition of auxiliary components in the present application, the selection of specific methods, etc., shall all fall within the protection scope and disclosure scope of the present application.

## Claims

1. A polyurethane prepolymer composition, which is terminated by aliphatic isocyanate and prepared by reacting aliphatic isocyanate with polyol, wherein 1,5-pentamethylene diisocyanate has a mass percentage of ≥50% in the aliphatic isocyanate;
the polyurethane prepolymer composition comprises a combination of a first prepolymer and a second prepolymer, wherein the first prepolymer is an adduct formed by the aliphatic isocyanate and the polyol in a molar ratio of 2:1, and the second prepolymer is an adduct formed by the aliphatic isocyanate and the polyol in a molar ratio of (n+1):n, wherein n≥2; and
the second prepolymer has a mass percentage of 15-75% in the polyurethane prepolymer composition.

2. The polyurethane prepolymer composition according to claim 1, wherein 1,5-pentamethylene diisocyanate has a mass percentage of 50-100% in the aliphatic isocyanate, preferably 60-100%; preferably, the aliphatic isocyanate further comprises any one or a combination of at least two of 1,6-hexamethylene diisocyanate, isophorone diisocyanate, cyclohexane diisocyanate, dicyclohexylmethane diisocyanate, and bis(isocyanatomethyl)cyclohexane.

3. The polyurethane prepolymer composition according to claim 1 or 2, wherein the polyol has an average functionality of 2;
preferably, the polyol has a number average molecular mass of 300-12000 g/mol, further preferably 300-3000 g/mol;
preferably, the polyol comprises any one or a combination of at least two of polyester polyol, polycaprolactone polyol, polycarbonate polyol, polyethylene oxide polyol, polypropylene oxide polyol, ethylene oxide/propylene oxide copolymer polyol, polytetrahydrofuran polyol, poly(1,3-propylene glycol) polyol, and vegetable oil polyol.

4. The polyurethane prepolymer composition according to any one of claims 1 to 3, wherein the aliphatic isocyanate and the polyol have a molar ratio of (2.2-15): 1;
preferably, an NCO group has a mass percentage of 2.5-15% in the polyurethane prepolymer composition;
preferably, free aliphatic isocyanate monomers have a mass percentage of ≤5% in the polyurethane prepolymer composition, further preferably ≤0.5%.

5. The polyurethane prepolymer composition according to any one of claims 1 to 4, wherein the first prepolymer has a mass percentage of 20-80% in the polyurethane prepolymer composition, further preferably 20-60%;
preferably, the second prepolymer comprises a combination of a third prepolymer and a fourth prepolymer, wherein the third prepolymer is an adduct formed by the aliphatic isocyanate and the polyol in a molar ratio of 3:2, and the fourth prepolymer is an adduct formed by the aliphatic isocyanate and the polyol in a molar ratio of (n₁+1):n₁ , wherein n₁≥3; and the third prepolymer has a mass percentage of 12-60% in the polyurethane prepolymer composition, further preferably 35-60%, and further more preferably 40-60%;
preferably, the fourth prepolymer has a mass percentage of 3-25% in the polyurethane prepolymer composition;
preferably, the polyurethane prepolymer composition has a viscosity of ≤20000 mPa·s at 25°C, further preferably ≤10000 mPa·s.

6. A preparation method for the polyurethane prepolymer composition according to any one of claims 1 to 5, comprising: subjecting the aliphatic isocyanate and the polyol to a reaction to obtain the polyurethane prepolymer composition.

7. The preparation method according to claim 6, wherein the reaction is performed at a temperature of 60-120°C;
preferably, the reaction is performed for a period of 2-10 h;
preferably, the reaction is performed in a protective atmosphere;
preferably, a reaction inhibitor is added when the reaction reaches an end point;
preferably, the reaction inhibitor comprises any one or a combination of at least two of an inorganic acid, an acyl chloride compound, a sulfonic acid compound, a sulfonate compound, monoalkyl phosphate, dialkyl phosphate, and an acidic compound containing a silyl group;
preferably, based on a total mass of the aliphatic isocyanate and the polyol being 100%, the reaction inhibitor is 1-200 ppm by mass, further preferably 2-80 ppm.

8. The preparation method according to claim 6 or 7, wherein after the reaction is completed, the preparation method further comprises a step of post-treatment;
preferably, the post-treatment comprises any one or a combination of at least two of reduced-pressure distillation, solvent-assisted distillation, co-distillation, wiped film evaporation, and extraction.

9. A curable polyurethane composition, comprising the polyurethane prepolymer composition according to any one of claims 1 to 5 and a curing agent;
preferably, the curing agent comprises polyamine and/or polyol;
preferably, the curable polyurethane composition further comprises a catalyst.

10. A polyurethane product, wherein a raw material for preparing the polyurethane product comprises the polyurethane prepolymer composition according to any one of claims 1 to 5 and/or the curable polyurethane composition according to claim 9;
preferably, the polyurethane product comprises any one of a polyurethane elastomer, a polyurethane adhesive, a polyurethane sealant, a polyurethane foam, a polyurethane coating, and a polyurethane adhesive film.
